# EUROPÄISCHE PATENTSCHRIFT

(11) **EP 2 587 242 B1**
(45) Veröffentlichungstag und Bekanntmachung des Hinweises auf die Patenterteilung: **30.09.2015**
(21) Anmeldenummer: 11186605.9
(22) Anmeldetag: 26.10.2011
(51) Int. Cl.: G01M 3/32, G01F 23/00

(54) **Leckagesonde für einen doppelwandigen Tank**
Leak detector for a double-wall tank
Sonde de détection de fuite pour un réservoir à double paroi

(43) Veröffentlichungstag der Anmeldung: 01.05.2013
(73) Patentinhaber: AFRISO-Euro-Index GmbH, 74363 Güglingen (DE)
(72) Erfinder: Heinz, Thomas, 74374 Zaberfeld (DE); Grob, Nadine, 74906 Bad Rappenau (DE)
(74) Vertreter: Kohler Schmid Möbus Patentanwälte

(56) Entgegenhaltungen:
- DE-U1- 8 902 770
- DE-U1- 8 902 770
- DE-U1- 29 916 373
- DE-U1- 29 916 373
- FR-A- 562 337
- FR-A- 601 739
- GB-A- 240 431

## Beschreibung

Die vorliegende Erfindung betrifft eine Leckagesonde mit einem vertikalen Sondenrohr mit einem vertikalbeweglich gelagerten Auftriebskörper, mit einem sich oben an das Sondenrohr anschließenden Anzeigegehäuse und mit einem innerhalb des Anzeigegehäuses verschiebbar geführten, durch eine Feder zumindest gegen die Gewichtskraft des Auftriebskörpers vorgespannten Leckmeldestößel, an dem der Auftriebskörper hängend gehalten ist.

Eine derartige Leckagesonde ist beispielsweise durch DE 299 16 373 U1 bekannt geworden.

Mit der Einführung von doppelwandigen Heizöltanks wurden Leckagesonden entwickelt, um den Innenbehälter des Heizöltanks auf Dichtheit zu überwachen. Aus DE 7131570 U und DE 299 16 373 U1 sind jeweils Leckagesonden bekannt, die mithilfe eines Schwimmers und einer Schubstange eine optische Alarmmeldung auslösen. Diese Leckagesonden können für alle Lagermedien eingesetzt werden, welche in dem Innenbehälter gelagert werden können. Bei der aus DE 299 16 373 U1 bekannten Leckagesonde ist der Schwimmer relativ klein ausgeführt und befindet sich unterhaib und damit außerhalb des eigentlichen Sondenrohrs. Allerdings kann diese Leckagesonde bei beengten Platzverhältnissen zwischen innen- und Außenbehälter nicht eingesetzt werden, da die Gefahr besteht, dass der Schwimmer sich zwischen Innen- und Außenbehälter einklemmt. Erschwert wird diese Problematik durch das mögliche Verrutschen des Innenbehälters zum Außenbehälter, z.B. durch Kippbewegungen beim Aufstellen des Tanks oder beim Transport.

Bei Tanks mit sehr beengten Einbauverhältnissen konnten bisher nur Leckagesonden eingesetzt werden, die mithilfe eines Quellkörpers und einer Schubstange eine optische Alarmanzeige auslösen. Solche Quellkörpersonden haben aber den großen Nachteil, dass, wenn Regenwasser in den Überwachungsraum eingetreten ist, es im Falle eines Heizöltanks zu keiner Anzeige mehr bei einem tatsächlich leckgeschlagenen Innenbehälter kommt. Da Wasser schwerer als Heizöl ist, kommt der Quellkörper nicht mehr in Kontakt mit Heizöl, wodurch die Funktion der Leckagesonde nicht mehr gegeben ist.

Bei der aus DE 299 16 373 U1 bekannten Leckagesonde ist der Auftriebskörper mit dem Leckmeldeslößel über eine Schubstange bewegungsgekoppelt, deren unteres Stangenende unten aus dem Sondenrohr vorsteht und den Auftriebskörper trägt. Der Auftriebskörper bzw. die Feder nehmen nicht nur das Gewicht des relativ leichten Auftriebskörpers, sondern auch das Gewicht der demgegenüber schwereren Schubstange auf und sind daher entsprechend zu dimensionieren.

FR 562 337 A offenbart einen Flüssigkeitsanzeiger mit einer starren Schubstange, die wie bei DE 299 16 373 U1 mit ihrem unteren Stangenende unten aus dem Sondenrohr vorsteht und den Auftriebskörper trägt.

Demgegenüber ist es die Aufgabe der vorliegenden Erfindung, eine Leckagesonde bereitzustellen, die auch bei beengten Platzverhältnissen eingesetzt werden kann und deren Funktion durch Verrutschen des Innenbehälters oder durch eine Formänderung des Innenbehälters bei der Befüllung nicht beeinträchtigt wird. Gleichzeitig sollte die Sonde für alle im Tank zulässigen Lagermedien verwendbar sein, sowie aus wenigen und möglichst einfachen Bauteilen hergestellt werden können, um eine rationelle Produktion zu ermöglichen.

Diese Aufgabe wird erfindungsgemäß dadurch gelöst, dass der Auftriebskörper an dem Leckmeldestößei mittels eines Zugseils hängend gehalten und vollständig innerhalb des Sondenrohrs angeordnet ist.

Erfindungsgemäß weist die Leckagesonde einen unter Federvorspannung stehenden Leckmeldestößel auf, an dem der Auftriebskörper bzw. Schwimmer hängt. Dabei ist die Federkraft so ausgelegt, dass, wenn sich der Auftriebskörper in seiner nichtaufgeschwommenen unteren Ruhelage befindet und daher keine Alarmmeldung sichtbar ist, die Federkraft geringfügig niedriger als die Gewichtskraft von Auftriebskörper und Leckmeldestößel ist.

Bei ganz besonders bevorzugten Ausführungsformen der Erfindung ist das Zugseil durch einen Faden oder Draht gebildet. Durch die Verwendung eines Zugseiles wird die Reibung zwischen Auftriebskörper und Sondenrohr auf ein Minimum reduziert, da es anders als bei der bisher bekannten Schubstange zu keiner Verkantung des Auftriebskörpers kommen kann. Denn die bei einer Verkantung entstehenden Reibungskräfte sind schnell größer als die geringfügige Auftriebskraft des Schwimmers, wodurch die Sonde funktionsuntüchtig wäre. Gleichzeitig ist es mit dem Zugseil möglich, beliebige Sondenlängen ohne Auswirkung auf die Systemkräfte zu fertigen. Bei der bisher üblichen Schubstange wirken sich deren Gewichtskräfte stark aus, so dass immer unterschiediiche Druckfedern entsprechend der jeweiligen Sondenlänge benötigt werden. Dies machte bisher eine erhöhte Anzahl an Bauteilen (Anzahl an zu bevorratenden Druckfedern), die für das System benötigt werden, erforderlich, was sich wiederum negativ auf Herstellkosten, Lieferfähigkeit und evtl. Verwechslungen und damit verbundene Funktionsprobleme auswirkte.

Der Auftriebskörper ist möglichst klein im Durchmesser ausgeführt, um auch in einem relativ kleinen Rohr untergebracht zu werden. Vorzugsweise wird ein gezogenes Metallrohr verwendet, welches eine hohe Oberflächengüte (= geringe Reibung), sowie dünne Wandstärken bei entsprechender Stabilität aufweist. Um auch bei dünnen Sondenrohren den erforderlichen Auftrieb zu erreichen, ist die Länge des zylinderförmigen Auftriebskörpers mindestens doppelt, insbesondere mindestens 5mal größer als sein Durchmesser. Diese Maßnahme wirkt außerdem einem Verkanten des Auftriebskörpers im Sondenrohr entgegen.

Vorteilhafterweise ist am unteren Ende des Sondenrohres eine Spitze angebracht, um die Sonde insbesondere in den Fällen, in denen kein durchgängiger Freiraum zwischen Außen- und Innenbehälter vorhanden ist, einfacher in den Überwachungsraum hineingedrückt werden kann. Da der Außenbehälter in der Regel aus zwei oder mehr Teilen (Behälter + Deckel) besteht, kommt es an der Verbindungsstelle aufgrund von Schweißnähten, Überlappungen etc. oft zu Platzproblemen im Zwischenraum zwischen Innen- und Außenbehälter.

Damit Flüssigkeit ungehindert in den Innenbereich des Sondenrohrs eintreten kann, kann das Sondenrohr in seinem unteren Bereich mit Öffnungen oder, was bevorzugt ist, die Spitze mit einer Durchgangsbohrung ausgeführt sein. Sofern der Auftriebskörper in seiner unteren Ruheposition an der Oberseite der Spitze aufliegt, sind die aneinander anliegenden Seiten von Spitze und Auftriebskörper so gestaltet, dass nur wenige Berührpunkte vorhanden sind. Dadurch kann der Auftriebskörper sicher durch in das Sondenrohr eintretende Flüssigkeit auftreiben und den unter Federvorspannung stehenden Leckmeldestößel freigeben, damit dieser angehoben wird und eine am Leckmeldestößel vorgesehene "Alarm"-Anzeige sichtbar wird.

Damit es zu keiner Komprimierung der Luft im Innern des Sondenrohres kommt, sondern die Flüssigkeit ungehindert aufsteigen kann, ist vorteilhafterweise im Bereich des oberen Rohrendes eine Entlüftungsöffnung vorgesehen, die das Rohrinnere mit der Atmosphäre verbindet. Die Entlüftungsöffnung ist bevorzugt zwischen Anzeigegehäuse und Sondenrohr vorgesehen und kann beispielsweise durch eine Längsnut gebildet sein, die außenseitig an einem Stutzen des Anzeigegehäuses verläuft, auf den das obere Rohrende des Sondenrohrs aufgesteckt ist.

Die Erfindung betrifft auch einen doppelwandigen Tank mit einem zwischen Innen- und Außenbehälter befindlichen Zwischenraum und mit einer wie oben ausgebildeten Leckagesonde, deren vertikales Sondenrohr in den Zwischenraum hineinragt.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: die erfindungsgemäße Leckagesonde mit einem in seiner nichtaufgeschwommenen unteren Ruhelage befindlichen Schwimmer in einem Längsschnitt;
- Fign. 2a, 2b: die erfindungsgemäße Leckagesonde mit dem in einer aufgeschwommenen Lage befindlichen Schwimmer in zwei unterschiedlichen Längsschnitten;
- Fign. 3a-3c: die einzelnen Montageschritte beim Einbau der erfindungsgemäßen Leckagesonde in einen doppelwandigen Tank; und
- Fig. 4: ein zweites Ausführungsbeispiel der erfindungsgemäßen Leckagesonde in einem doppelwandigen Tank.

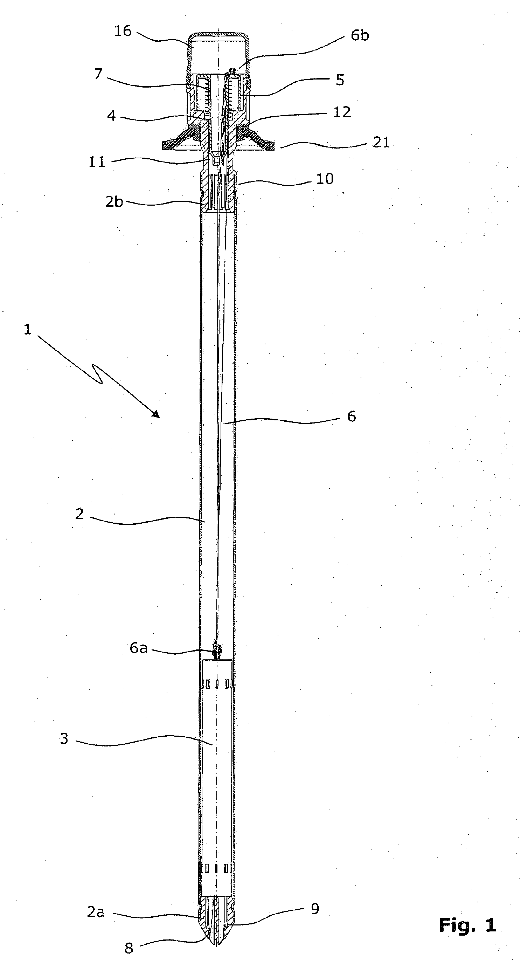

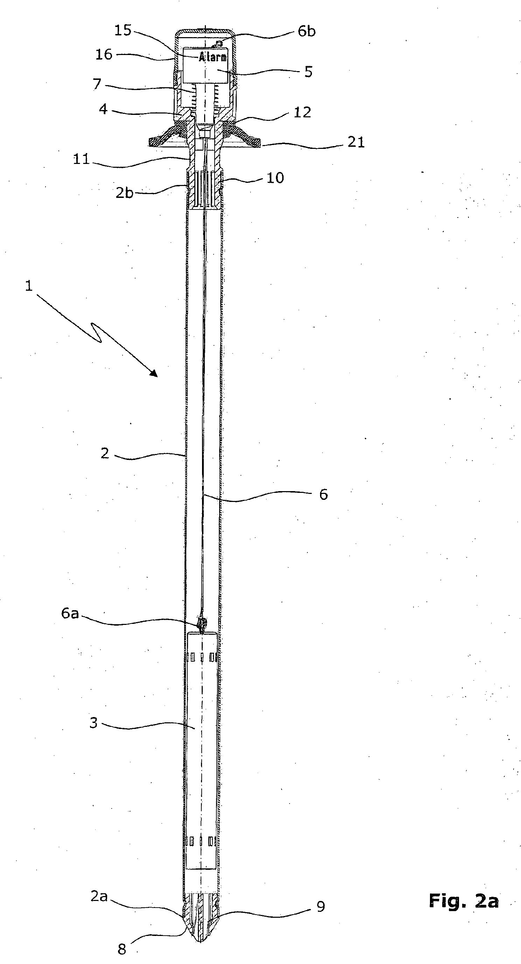

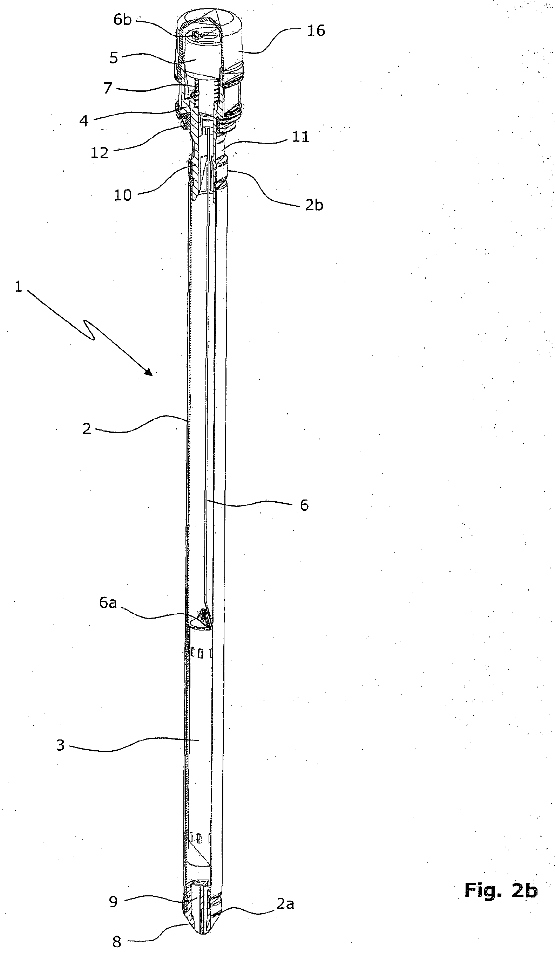

Die in **Fign. 1** **und** **2** gezeigte Leckagesonde **1** umfasst ein vertikales Sondenrohr **2**, einen innerhalb des Sondenrohrs 2 vertikalbeweglich gelagerten zylinderförmigen Schwimmer (Auftriebskörper) **3,** ein sich oben an das Sondenrohr 2 anschließendes Anzeigegehäuse **4** und einen innerhalb des Anzeigegehäuses 4 vertikalverschiebbar geführten Leckmeldestößel **5**, an dem der Auftriebskörper 3 mittels eines Zugseils **6** hängend gehalten ist. Das Zugseil 6 ist einenends bei **6a** an einem oberseitigen Haken des Schwimmers 3 und anderenends bei **6b** an einem oberseitigen Haken des Leckmeldestößels 5 befestigt, wobei es durch eine Längsbohrung des Leckmeldestößels 5 verläuft. Der Leckmeldestößel 5 ist nach oben durch eine gehäuseseitig abgestützte Feder **7** vorgespannt, deren Federkraft in dem in Fig. 1 gezeigten Ruhezustand des Schwimmers 3 geringfügig niedriger als die Gewichtskraft von Schwimmer 3 und Leckmeldestößel 5 ist.

Das Sondenrohr 2 ist durch ein gezogenes Metallrohr gebildet, das eine hohe Oberflächengüte (= geringe Reibung) sowie dünne Wandstärken bei entsprechender Stabilität aufweist. Über die Länge des Schwimmers 3 kann der gewünschte Auftrieb des Schwimmers 3 eingestellt werden.

In das untere Rohrende **2a** ist eine nach unten zulaufende Spitze **8** eingesetzt, die mindestens eine durchgehende Längsbohrung **9** aufweist, damit Flüssigkeit von außen ungehindert in den Innenraum des Sondenrohrs 2 eintreten kann. Mit der Spitze 8 voran kann die Leckagesonde 1 einfacher in den Zwischenraum (Überwachungsraum) eines doppelwandigen Tanks eingeführt werden.

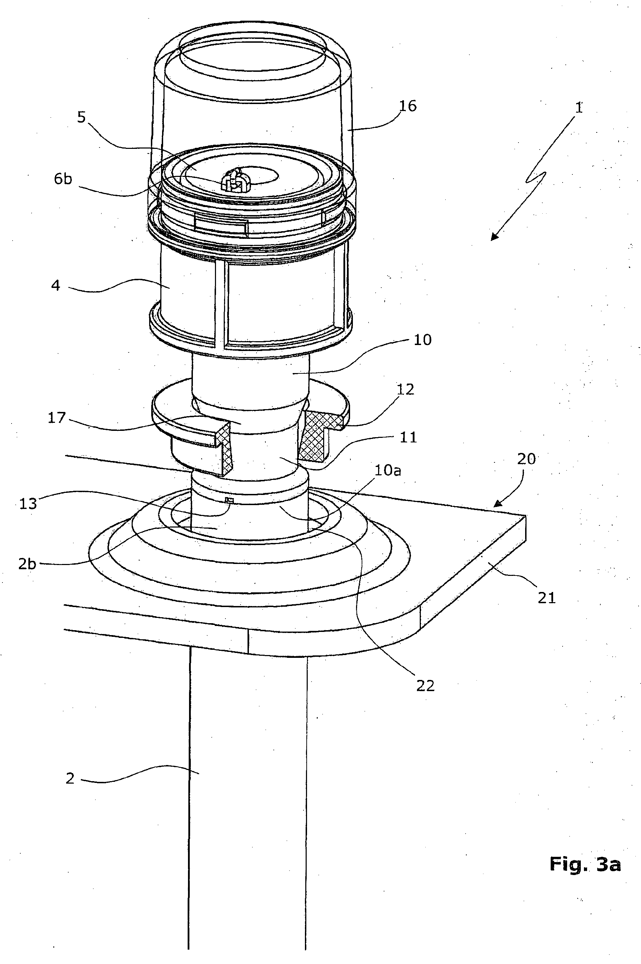

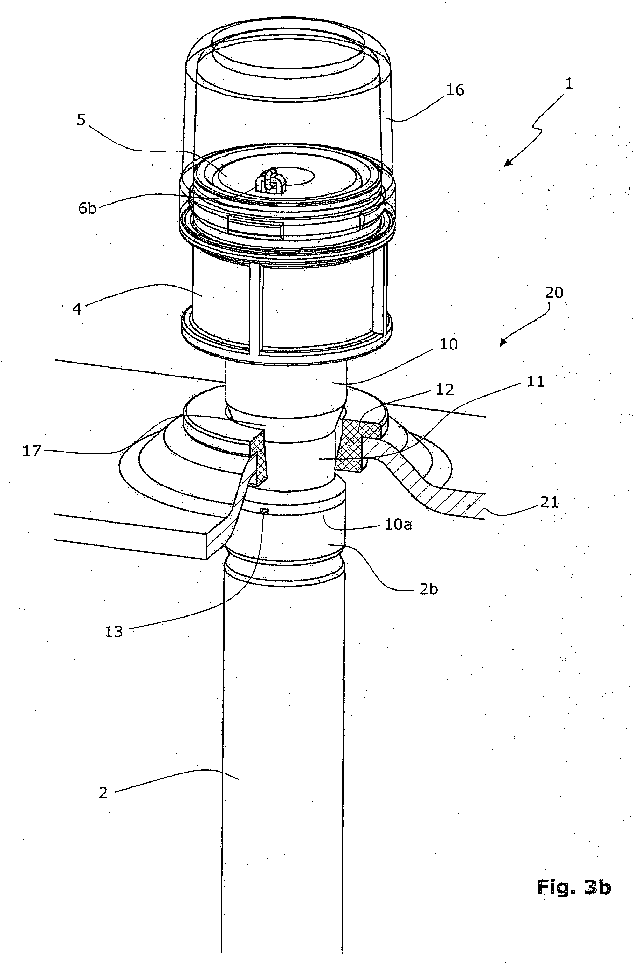

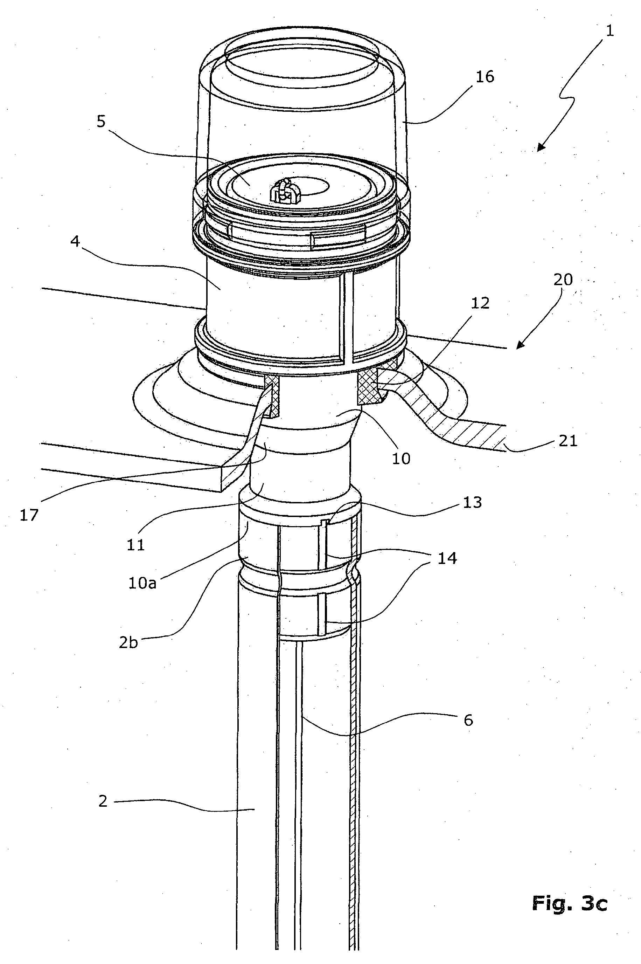

Das obere Rohrende **2b** ist auf einen Stutzen **10** des Anzeigegehäuses 4 bis zur Anlage an einem Stutzenabsatz **10a** (Fig. 3) aufgesteckt und verpresst. Oberhalb des Stutzenabsatzes 10a weist der Stutzen 10 noch einen Abschnitt **11** mit reduziertem Außendurchmesser sowie eine auf dem Stutzen 10 verschiebbare ringförmige Dichtung **12** auf.

Damit es zu keiner Komprimierung der Luft im Innern des Sondenrohres 2 kommt, sondern die Flüssigkeit ungehindert aufsteigen kann, ist, wie in **Fign. 3a-3c** gezeigt, zwischen dem oberen Rohrende 2b und dem Stutzenabsatz 10a eine Entlüftungsöffnung **13** vorgesehen, die beispielsweise über eine zwischen Stutzen 10 und Sondenrohr 2, nämlich außenseitig im Stutzen 10, verlaufende Längsnut **14** mit dem Rohrinnere verbunden ist. Dadurch kann der Schwimmer 3 sicher durch von außen in das Sondenrohr 2 eintretende Flüssigkeit auftreiben und den unter Federvorspannung stehenden Leckmeldestößel 5 freigeben, der durch die Feder 7 angehoben wird. In dieser in Fig. 2 gezeigten angehobenen Lage ist die am Leckmeldestößel 5 vorhandene und in der Ruhelage nicht sichtbare "Alarm"-Anzeige **15** durch eine transparente Kappe **16** des Anzeigegehäuses 4 hindurch sichtbar.

In **Fign. 3a-3c** sind die einzelnen Montageschritte beim Einbau der Leckagesonde 1 in einen doppelwandigen Tank **20** gezeigt, von dem der Außenbehälter **21,** nicht jedoch der Innenbehälter und der zwischen Innen- und Außenbehälter befindliche Zwischenraum gezeigt sind. Die Leckagesonde 1 wird mit der Spitze 8 voran durch eine Einbauöffnung **22** des Außenbehälters 21 in den Zwischenraum vertikal eingeführt, wobei sich die Dichtung 12 in ihrer Montageposition auf dem radial nach innen zurückversetzten Abschnitt 11 befindet (Fig. 3a). Durch diesen zurückversetzten Abschnitt 11 ist es möglich, ein Sondenrohr 2 mit dem größtmöglichen Außendurchmesser in die Einbauöffnung 22 zu montieren, ohne dass das Sondenrohr 2 über die gesamte Rohrlänge durch die gequetschte Dichtung 12 gedrückt werden muss. Die Dichtung 12 wird erst kurz vor dem Ende des Einbauweges über eine sich oben an den Abschnitt 11 anschließende Konusfläche **17** des Stutzens 10 auf den eigentlichen Außendurchmesser des Stutzens 10 aufgeweitet und fixiert (Fign. 3b, 3c), wodurch die Verpressung der Dichtung 12 erst auf den letzten Millimetern erfolgt.

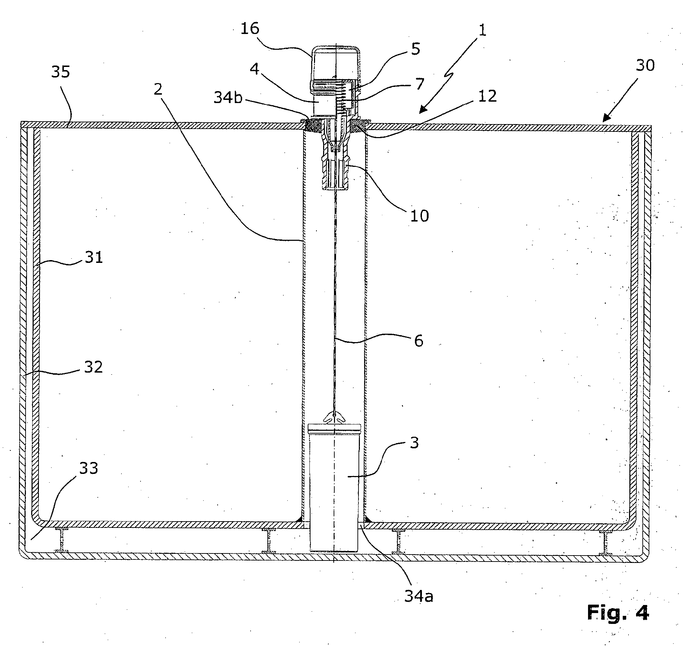

**Fig. 4** zeigt ein zweites Ausführungsbeispiel der Leckagesonde 1 in einem doppelwandigen Tank **30,** der einen zwischen Innen- und Außenbehälter **31, 32** befindlichen Zwischenraum **33** aufweist. Bei dem Tank 30 handelt es sich also um einen Tank mit einem doppelten Boden, in dessen Zwischenraum 33 sich bei einer Leckage des Innenbehälters 31 Öl sammelt. Um eine Undichtheit des Innenbehälters 31 zu detektieren, wird am Innenbehälter 31 ein durchgehendes vertikales Rohr 2 an einer vorbereiteten Stelle flüssigkeitsdicht angeschweißt. An dieser Stelle verfügt der Tank 30 bereits über Durchbrüche **34a, 34b** im Boden des Innenbehälters 31 und in der gemeinsamen Tankdecke **35**. Durch dieses tankseitig vorhandene Rohr 2 ist vom Prinzip ein Sichtkontakt von oben bis zum unteren Tankboden des Außenbehälters 32 gegeben. Dieses fest in den Tank 30 eingebaute Rohr 2 bildet das Sondenrohr, in dem der Schwimmer 3 der Leckagesonde 1 vertikalbeweglich geführt ist. Das Anzeigegehäuse 4 der Leckagesonde 1 (inkl. Leckmeldestößel 5, Druckfeder 7 und Kappe 16) ist mithilfe der Dichtung 12 im oberen Durchbruch 34b befestigt, wobei der Stutzen 10 des Anzeigegehäuses 4 frei in das Sondenrohr 2 hineinragt. Die Länge des Zugseils 6 ist so bemessen, dass der Schwimmer 3 bis in den Zwischenraum 33 hineinhängt.

## Patentansprüche

1. Leckagesonde (1)
mit einem vertikalen Sondenrohr (2),
mit einem vertikalbeweglich gelagerten Auftriebskörper (3),
mit einem sich oben an das Sondenrohr (2) anschließenden Anzeigegehäuse (4), und
mit einem innerhalb des Anzeigegehäuses (4) verschiebbar geführten, durch eine Feder (7) zumindest gegen die Gewichtskraft des Auftriebskörpers (3) vorgespannten Leckmeldestößei (5), an dem der Auftriebskörper (3) hängend gehalten ist,
**dadurch gekennzeichnet,**
**dass** der Auftriebskörper (3) an dem Leckmeldestößel (5) mittels eines Zugseiis (6) hängend gehalten und vollständig innerhalb des Sondenrohrs (2) angeordnet ist.

2. Leckagesonde nach Anspruch 1, **dadurch gekennzeichnet, dass** der Leckmeldestößel (5) innerhalb des Anzeigegehäuses (4) vertikalverschiebbar geführt und durch die Feder (7) gegen die eigene Gewichtskraft vorgespannt ist.

3. Leckagesonde nach Anspruch 1 oder 2, **dadurch gekennzeichnet, dass** das Zugseil (6) durch einen Faden oder Draht gebildet ist.

4. Leckagesonde nach einem der vorhergehenden Ansprüche, **dadurch gekennzeichnet, dass** die vertikale Länge des Auftriebskörpers (3) mindestens doppelt, insbesondere mindestens 5mal größer als sein Durchmesser ist.

5. Leckagesonde nach einem der vorhergehenden Ansprüche, **dadurch gekennzeichnet, dass** das Sondenrohr (2) durch ein insbesondere gezogenes Metallrohr gebildet ist.

6. Leckagesonde nach einem der vorhergehenden Ansprüche, **dadurch gekennzeichnet, dass** am unteren Rohrende (2a) des Sondenrohrs (2) eine nach unten zulaufende Spitze (8) angebracht ist.

7. Leckagesonde nach Anspruch 6, **dadurch gekennzeichnet, dass** die Spitze (8) mindestens eine Durchgangsbohrung, insbesondere mindestens eine Längsbohrung (9), aufweist.

8. Leckagesonde nach einem der vorhergehenden Ansprüche, **dadurch gekennzeichnet, dass** im Bereich des oberen Rohrendes (2b) eine Entlüftungsöffnung (13) vorgesehen ist, die das Rohrinnere mit der Atmosphäre verbindet.

9. Leckagesonde nach Anspruch 8, **dadurch gekennzeichnet, dass** die Entlüftungsöffnung (13) eine Längsnut (14) aufweist, die außenseitig in einem Stutzen (10) des Anzeigegehäuses (4) verläuft, auf dem das obere Rohrende (2b) des Sondenrohrs (2) angebracht ist.

10. Doppelwandiger Tank (20; 30) mit einem zwischen Innen- und Außenbehälter (31; 21, 32) befindlichen Zwischenraum (33) und mit einer Leckagesonde (1) nach einem der vorhergehenden Ansprüche, deren vertikales Sondenrohr (2) in den Zwischenraum (33) hineinragt.

11. Doppelwandiger Tank nach Anspruch 10, **dadurch gekennzeichnet, dass** das vertikale Sondenrohr (2) fest in den Tank (30) eingebaut ist.

## Claims

1. Leak detector (1), comprising
a vertical probe tube (2),
a vertically movably mounted float (3),
a display housing (4) arranged subsequent to and on top of the probe tube (2), and
a leakage detection plunger (5) which is displaceably guided within the display housing (4), is prestressed by a spring (7) at least against the weight of the float (3), and on which the float (3) is held in a suspended manner, **characterized in that**
the float (3) is held in a suspended manner on the leakage detection plunger (5) by means of a pull rope (6) and is entirely arranged within the probe tube (2).

2. Leak detector according to claim 1, **characterized in that** the leakage detection plunger (5) is guided within the display housing (4) such that it can be displaced in a vertical direction and is prestressed by the spring (7) against its own weight.

3. Leak detector according to claim 1 or 2, **characterized in that** the pull rope (6) is formed by a thread or a wire.

4. Leak detector according to any one of the preceding claims, **characterized in that** the vertical length of the float (3) is at least twice as large, in particular at least 5 times as large, as its diameter.

5. Leak detector according to any one of the preceding claims, **characterized in that** the probe tube (2) is formed by a metal tube, which has, in particular, been drawn.

6. Leak detector according to any one of the preceding claims, **characterized in that** a downwardly tapering tip (8) is provided at the lower tube end (2a) of the probe tube (2).

7. Leak detector according to claim 6, **characterized in that** the tip (8) has at least one through bore, in particular at least one longitudinal bore (9).

8. Leak detector according to any one of the preceding claims, **characterized in that** in the area of the upper tube end (2b), a vent hole (13) is provided which connects the tube inside to the atmosphere.

9. Leak detector according to claim 8, **characterized in that** the vent hole (13) has a longitudinal groove (14) which extends on the outside in a connecting piece (10) of the display housing (4), on which the upper tube end (2b) of the probe tube (2) is mounted.

10. Double-walled tank (20; 30) with an intermediate space (33) located between the inner and the outer container (31; 21, 32) and with a leak detector (1) in accordance with any one of the preceding claims, the vertical probe tube (2) of which projects into the intermediate space (33).

11. Double-walled tank according to claim 10, **characterized in that** the vertical probe tube (2) is permanently installed in the tank (30).

## Revendications

1. Sonde (1) de détection de fuite,
avec un tube de sonde vertical (2),
avec un flotteur (3) monté verticalement mobile,
avec un boîtier d'affichage (4) se raccordant en haut au tube de sonde (2),
et avec un plongeur (5) de signalisation de fuite guidé en coulissement à l'intérieur du boîtier d'affichage (4) et précontraint par un ressort (7) au moins à l'encontre de la force de pesanteur du flotteur (3), plongeur auquel le flotteur (3) est fixé de manière suspendue,
**caractérisée en ce que** le flotteur (3) est fixé de manière suspendue au plongeur (5) de signalisation de fuite au moyen d'un câble de traction (6) et est disposé en totalité à l'intérieur du tube de sonde (2).

2. Sonde de détection de fuite selon la revendication 1, **caractérisée en ce que** le plongeur (5) de signalisation de fuite est guidé en coulissement vertical à l'intérieur du boîtier d'affichage (4) et est précontraint par le ressort (7) à l'encontre de sa propre force de pesanteur.

3. Sonde de détection de fuite selon la revendication 1 ou 2, **caractérisée en ce que** le câble de traction (6) est formé par un fil textile ou un fil métallique.

4. Sonde de détection de fuite selon l'une des revendications précédentes, **caractérisée en ce que** la longueur verticale du flotteur (3) est égale au moins au double de son diamètre, en particulier est au moins 5 fois supérieure à son diamètre.

5. Sonde de détection de fuite selon l'une des revendications précédentes, **caractérisée en ce que** le tube de sonde (2) est formé par un tube métallique, en particulier étiré.

6. Sonde de détection de fuite selon l'une des revendications précédentes, **caractérisée en ce qu'**une pointe (8) dirigée vers le bas est installée à l'extrémité inférieure (2a) du tube de sonde (2).

7. Sonde de détection de fuite selon la revendication 6, **caractérisée en ce que** la pointe (8) présente au moins un perçage traversant, en particulier au moins un perçage longitudinal (9).

8. Sonde de détection de fuite selon l'une des revendications précédentes, **caractérisée en ce qu'**une ouverture (13) d'évacuation d'air, qui met en communication l'intérieur du tube avec l'atmosphère extérieure, est prévue dans la région de l'extrémité supérieure (2b) du tube.

9. Sonde de détection de fuite selon la revendication 8, **caractérisée en ce que** l'ouverture (13) d'évacuation d'air présente une rainure longitudinale (14) qui s'étend extérieurement dans une tubulure (10) du boîtier d'affichage (4) sur laquelle est montée l'extrémité supérieure (2b) du tube de sonde (2).

10. Réservoir (20 ; 30) à double paroi, avec un espace intermédiaire (33) se trouvant entre un récipient intérieur et un récipient extérieur (31 ; 21, 32), et avec une sonde de détection de fuite selon l'une des revendications précédentes, dont le tube de sonde vertical (2) pénètre dans l'espace intermédiaire (33).

11. Réservoir à double paroi selon la revendication 10, **caractérisé en ce que** le tube de sonde vertical (2) est fixement installé dans le réservoir (30).
